Europäisches Patentamt

European Patent Office

Office européen des brevets

(11) Veröffentlichungsnummer: **0 268 011 B1**

(12) **EUROPÄISCHE PATENTSCHRIFT**

(45) Veröffentlichungstag der Patentschrift: **23.10.91**

(51) Int. Cl.⁵: **F16C 29/06, B23Q 11/08**

(21) Anmeldenummer: **87107528.9**

(22) Anmeldetag: **23.05.87**

(54) **Linearlageranordnung.**

(30) Priorität: **24.10.86 DE 3636138**

(43) Veröffentlichungstag der Anmeldung:
**25.05.88 Patentblatt 88/21**

(45) Bekanntmachung des Hinweises auf die
Patenterteilung:
**23.10.91 Patentblatt 91/43**

(84) Benannte Vertragsstaaten:
**AT BE CH DE ES FR GB IT LI LU NL SE**

(56) Entgegenhaltungen:
**EP-A- 124 648          EP-A- 0 118 691**
**DE-A- 3 308 036          DE-C- 257 815**
**DE-C- 3 420 936          FR-A- 2 039 840**

(73) Patentinhaber: **NEFF GMBH**
**Bonholzstrasse 17**
**W-7035 Waldenbuch(DE)**

(72) Erfinder: **Hauser, Karlheinz**
**Klingenbachstrasse 3**
**W-7031 Steinenbronn(DE)**
Erfinder: **Ringger, Manfred**
**Im Kissling 2**
**W-7440 Nürtingen(DE)**
Erfinder: **Tittl, Erich**
**Birkenwaldweg 14**
**W-7035 Waldenbuch(DE)**

(74) Vertreter: **Rüger, Rudolf, Dr.-Ing. et al**
**Webergasse 3 Postfach 348**
**W-7300 Esslingen/Neckar(DE)**

## Beschreibung

Die Erfindung betrifft eine Linearlageranordnung, mit einer eine längsverlaufende, wannenartige Vertiefung aufweisenden Führungsschiene, gemäß dem Oberbegriff des Patentanspruchs 1.

Bei einer aus der DE-A-33 08 036 bekannten Linearlageranordnung sind die Kugelrückführungsbahnen durch parallele Axialbohrungen in dem Schlitten bzw. in dem mit diesem verbundenen Lagerteil ausgebildet. Das bedeutet einen beträchtlichen Herstellungsaufwand, während gleichzeitig die Höhenabmessungen des Schlittens und damit der Platzbedarf der Linearlageranordnung nicht unter einen bestimmten Mindestwert verringert werden können.

Grundsätzlich Gleiches gilt auch für eine aus der FR-A-2039 840 bekannte Linearlageranordnung, von der die Erfindung ausgeht, und bei der die Führungsschiene in zwei parallele Teilschienen aufgelöst ist, die auf einem festen Träger gegeneinander justiert montiert sind.

Bei einem aus der EP-A-0 118 691 bekannten Linearlager weist die im Querschnitt im wesentlichen I-förmige Führungsschiene zwei einander gegenüberliegende, längsverlaufende, im wesentlichen wannenartige Vertiefungen auf, von denen jede im Bereiche der schrägen Wandungen zwei erste Kugellaufbahnen trägt. Der Schlitten ist in Gestalt eines die Führungsschiene allseitig umgebenden geschlossenen Rahmens ausgebildet, der über zwei in die beiden wannenartigen Vertiefungen der Führungsschiene ragende, mit den zweiten Kugellaufbahnen versehene Lagerteile und auf den Kugellaufbahnen befindliche kugelreihen gegen die Führungsschiene abgestützt ist. Die beide Lagerteile sind dabei zusammen mit auf sie aufgesetzten, die Kugelumleiteinrichtungen und die Kugelrückführungs-Kanäle enthaltenden Rahmenteilen getrennte, eigene Baueinheiten, die mit dem Schlitten jeweils über eine kardanische Lagerstelle gekuppelt sind. Die beiden Lagerteile sind deshalb bezüglich des Schlittens schwenkbar gelagert, um sich selbständig auf die geometrischen Gegebenheiten der Führungsschiene einstellen zu können.

Ein die Führungsschiene allseitig umgreifender bügelartiger Schlitten ist für viele Anwendungszwecke unerwünscht, u.a. weil er einen verhältnismäßig großen Platzbedarf bedingt. Aus den gleichen Gründen sind auch die Querschnittsabmessungen der Führungsschiene in der Praxis begrenzt, so daß bei einer größeren Länge der Führungsschiene eigene versteifende Trag- oder Auflagekonstruktionen für die Führungsschiene erforderlich sind.

Andere Linearlager, wie sie in vielfältigen Ausführungsformen bekannt sind (bspw. DE-C-33 13 129 ≙ EP-A-124 648), weisen einen im wesentlichen C-förmigen Schlitten auf, der die Führungsschiene dreiseitig umgreift. Hinsichtlich der Kugelrückführung ist dabei die Anordnung derart getroffen, daß der Schlitten eine Ausnehmung aufweist, in die ein nach Art einer Doppelrinne ausgebildetes Kugelrückführelement eingesetzt ist, das durch einen Drahtbügel festgehalten ist. Auch bei diesen Linearlageranordnungen sind die Querschnittsabmessungen beträchtlich.

Auch ist es nicht möglich, den Schlitten - quer zu der Führungsschiene - schmäler als die Führungsschiene oder auch nur mit deren Breite auszubilden, wie dies mit Rücksicht auf die für den Einbau einer Linearlageranordnung geltenden Platzverhältnisse nicht selten erwünscht wäre.

Aufgabe der Erfindung ist es deshalb, ein Linearlager zu schaffen, das bei universeller Einsatzfähigkeit sich durch einen besonders einfachen und herstellungs- sowie montagefreundlichen Aufbau auszeichnet und gleichzeitig keinen großen Platzbedarf erfordert.

Zur Lösung dieser Aufgabe weist die eingangs genannte Linearlageranordnung die Merkmale des kennzeichnenden Teiles des Patentanspruches 1 auf.

Diese Linearlageranordnung weist einen sehr kompakten Aufbau auf, der sich durch einfache Herstellungsverhältnisse auszeichnet, wobei der Platzbedarf der Linearlageranordnung auch in der Höhendimension auf ein Minimum reduziert werden kann, weil die Kugelrückführungsbahnen durch Nuten in dem Schlitten gebildet sind, welche durch Abdeckmittel abgedeckt sind, die insbesondere durch wenigstens eine auf den Schlitten aufgesetzte Abdeckkappe oder -platte gebildet sind. Die Abdeckelemente können insbesondere auch aus Kunststoffmaterial hergestellt sein, da an sie keine Festigkeitsanforderungen gestellt werden.

Die Einsatzfähigkeit gilt insbesondere auch für Einsatzfälle, bei denen mit einer Verschmutzung der außerhalb des Schlittens liegenden Kugellaufbahnabschnitte der Führungsschiene gerechnet werden muß. Da die wannenartige Vertiefung der Führungsschiene beidseitig des Schlittens durch ein biegsames Abdeckband verschlossen ist, das endseitig an der Führungsschiene verankert und über oder durch den Schlitten geführt ist, sind bei dieser Linearlageranordnung alle Kugellaufbahnen insgesamt abgedeckt und geschützt, was die Möglichkeit eröffnet, die Linearlageranordnung auch unter Betriebsbedingungen einzusetzen, bei denen mit Rücksicht auf die Verschmutzung oder Gefährdung der Kugellaufbahnen und die dadurch hervorgerufene Verklemmungsgefahr ein Linearlager bisher nicht ohne weiteres verwendbar war.

Die Kugellaufbahnen können insbesondere bei kleineren Bauausführungen der Linearlageranordnung unmittelbar an der einstückigen Profilschiene bzw. dem Lagerteil des Schlittens mit der erforderlichen Genauigkeit ausgebildet sein. Die Anordnung kann aber auch derart getroffen sein, daß die ersten und/oder die zweiten Kugellaufbahnen in gehärteten Führungsleisten ausgebildet sind, die in die Führungsschiene bzw. das Lagerteil eingesetzt sind. Das bringt u.a. den Vorteil mit sich, daß die Führungsschiene und der Schlitten oder dessen Lagerteil aus einem anderen, insbesondere weicheren Material hergestellt werden können, als die die Kugellaufbahnen tragenden gehärteten Führungsleisten. So können die Führungsschiene und/oder der Schlitten oder dessen Lagerteil z.B. aus Aluminium- oder sogar Kunststoffmaterial bestehen.

Um günstige exakte Laufverhältnisse für die Kugeln auf den Kugellaufbahnen zu gewährleisten, kann es vorteilhaft sein, wenn jede Kugellaufbahn im Querschnitt wenigstens zwei mit dem Kugelradius kreisförmig gekrümmte Bereiche und einen dazwischenliegenden, außer Berührung mit der Kugeloberfläche stehenden dritten Bereich aufweist.

Die Führungsschiene selbst kann in einer bevorzugten Ausführungsform eine im wesentlichen rechteckige oder quadratische Querschnittsgestalt aufweisen, wobei der Schlitten in dem Bereiche oberhalb des Lagerteiles mit einer der Führungsschiene entsprechenden, im wesentlichen rechteckigen bzw. quadratischen Querschnittsgestalt ausgebildet ist.

Zweckmäßig ist es auch, wenn der Schlitten beidseitig des Lagerteiles im wesentlichen ebene Flächenbereiche aufweist, durch die zusammen mit zugeordneten ebenen Flächenbereichen beidseitig der wannenartigen Vertiefung der Führungsschiene jeweils ein enger Spalt begrenzt ist. Auf diese Weise wird mit einfachen Mitteln ein wirksamer Schutz der Kugeln gegen das Eindringen von Fremdkörpern und Verunreinigungen erzielt.

Das biegsame Band und/oder die Führungsschiene weisen mit Vorteil Halterungsmittel auf, mit denen das Band in der wannenartigen Vertiefung beidseitig des Schlitzes lösbar gehalten ist, wobei an dem Schlitten das Band auf der einen Schlittenseite in die wannenartige Vertiefung eindrückende und auf der anderen Schlittenseite aus dieser aushebende Bandumlenkmittel angeordnet sind. Damit ist sichergestellt, daß auch bei einer verhältnismäßig langen Führungsschiene und hängend angeordnetem Schlitten die Abdeckung der Kugellaufbahnen der Führungsschiene stets einwandfrei erhalten bleibt und ein Durchhängen des biegsamen Bandes ausgeschlossen ist.

Konstruktiv einfache Verhältnisse ergeben sich in diesem Zusammenhang, wenn an der Führungsschiene im Bereiche der wannenartigen Vertiefung längsverlaufende Nuten oder Stege angeordnet sind, mit denen Halteteile an dem biegsamen Band lösbar verriegelbar sind. Mit Rücksicht auf einen kleinen Platzbedarf kann es auch zweckmäßig sein, daß das biegsame Band mit den beidseitig des Schlittens seitlich angrenzenden Oberflächenbereichen der Führungsschiene und/oder des Schlittens im wesentlichen fluchtend angeordnet ist.

Die Kugelumleiteinrichtungen können Kugelumleitkanäle begrenzende, schalenförmige Elemente aufweisen, die stirnseitig mit dem Schlitten verbunden sind. Dabei ergeben sich sehr einfache Verhältnisse, wenn wenigstens ein Teil dieser schalenförmigen Elemente an den erwähnten Abdeckmitteln gehaltert sind.

Ohne allzugroße Anforderungen an die Bearbeitungsgenauigkeit der Führungsschiene und des Schlittens im Bereiche der Kugellaufbahnen einen spielfreien Lauf des Schlittens auf der Führungsschiene zu gewährleisten, ist es von Vorteil, wenn das Lagerteil des Schlittens eine die Lage der zweiten Kugellaufbahnen zu den ersten Kugellaufbahnen beeinflussende Stelleinrichtung aufweist. Diese Stelleinrichtung kann zweckmäßigerweise eine in dem Bereich zwischen den beiden Kugellaufbahnen wirksame Spreizeinrichtung enthalten, welche in einer bevorzugten Ausführungsform eine zwischen die beiden Kugellaufbahnen ragende, randoffene, schlitzartige Nut aufweisen kann, in die verstellbare Spreizelemente ragen.

In der Zeichnung ist ein Ausführungsbeispiel des Gegenstandes der Erfindung dargestellt. Es zeigen:

Fig. 1 eine Linearlageranordnung gemäß der Erfindung, in einer Draufsicht und im Ausschnitt,

Fig. 2 die Linearlageranordnung nach Fig. 1, geschnitten längs der Linie II-II der Fig. 1, in einer Seitenansicht,

Fig. 3 die Linearlageranordnung nach Fig. 1, in einer stirnseitigen Ansicht,

Fig. 4 den Schlitten der Linearlageranordnung nach Fig. 1, in einer perspektivischen Darstellung,

Fig. 5 die Führungsschiene der Linearlageranordnung nach Fig. 1, in einer perspektivischen Darstellung und im Ausschnitt,

Fig. 6 die Linearlageranordnung nach Fig. 1, geschnitten längs der Linie VI-VI der Fig. 1, in einer Seitenansicht, in einem anderen Maßstab, sowie im Ausschnitt, unter Veranschaulichung der Lagerverhältnisse einer Kugel auf zwei einander zugeordneten Kugellaufbahnen,

Fig. 7 den Schlitten der Linearlageranordnung nach Fig. 4, geschnitten längs der Linie VII-VII der Fig. 4, in einer Seitenansicht,

Fig. 8    ein Kugelumleitteil der Linearlageranordnung nach Fig. 1, in einer Seitenansicht,

Fig. 9    das Kugelumleitteil nach Fig. 8, in einer Draufsicht,

Fig. 10   das Kugelumleitteil nach Fig. 8, in einer Draufsicht auf die Innenseite, unter Veranschaulichung der Kugelumleitkanäle,

Fig. 11   das Abdeckteil der Linearlageranordnung nach Fig. 1, in einer Seitenansicht,

Fig. 12   das Abdeckteil nach Fig. 11, in einer Draufsicht, und

Fig. 13   das Abdeckteil nach Fig. 11, geschnitten längs der Linie XII-XII der Fig. 11, in einer Seitenansicht.

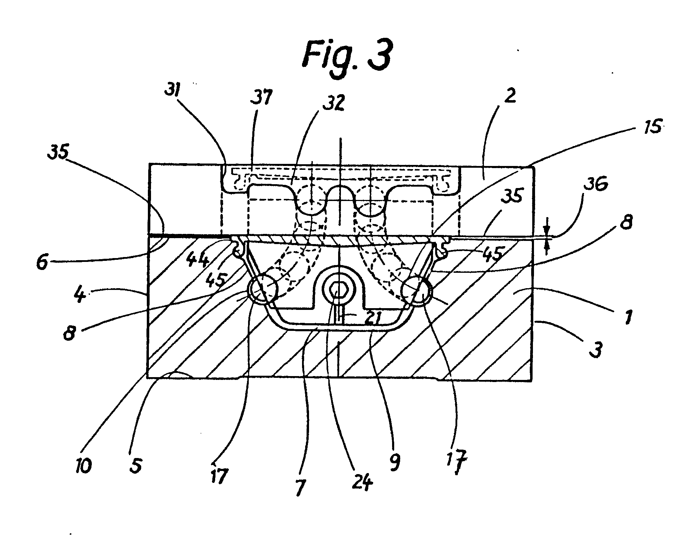

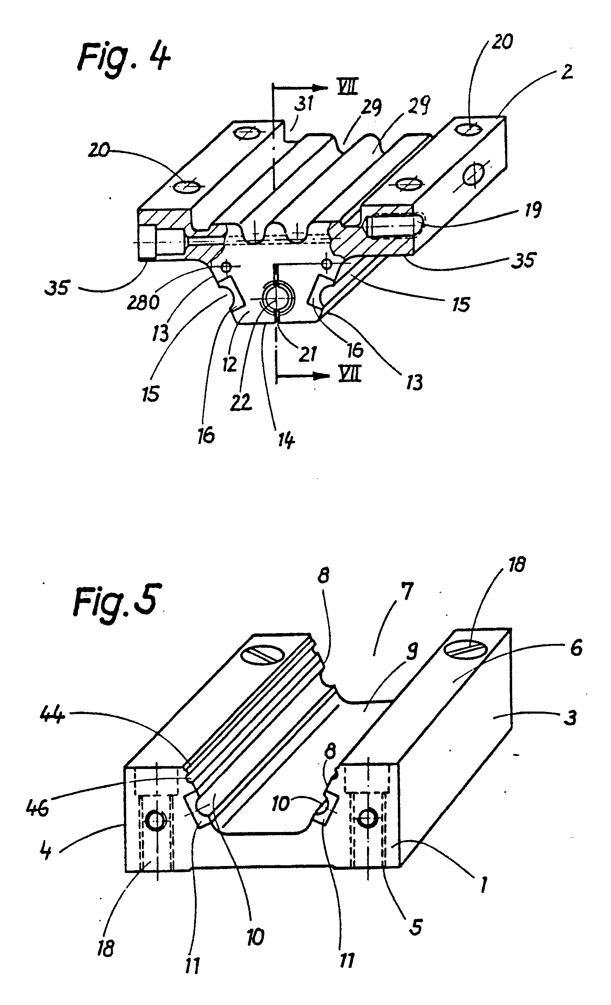

Die in der Zeichnung dargestellte Linearlageranordnung weist eine Führungsschiene 1 und einen auf dieser geradlinig längsverschieblich gelagerten Schlitten 2 auf. Wie bspw. aus den Fig. 3, 5 zu ersehen, ist die Führungsschiene 1 mit rechteckiger Querschnittsgestalt ausgebildet und geradflächig begrenzt. Ihre beiden Seitenflächen sind mit 3,4 bezeichnet; ihre gleichzeitig eine Befestigungsfläche bildende Bodenfläche ist bei 5 dargestellt, während ihrer der Bodenfläche 5 gegenüberliegende obere Fläche mit 6 bezeichnet ist. Ausgehend von der oberen Fläche 6 enthält die Führungsschiene 1 eine symmetrisch angeordnete, längsverlaufende, wannenartige Vertiefung 7 von im wesentlichen trapezförmiger Querschnittsgestalt. Die beiden schräg nach innen zu geneigten Seitenwände 8 der wannenartigen Vertiefung 7 schließen einen Keilwinkel von ca. 50° miteinander ein. Sie gehen jeweils mit einem Radius in eine Bodenwand 9 über, die im wesentlichen parallel zu der Bodenfläche 5 verläuft. Die wannenartige Vertiefung 7 erstreckt sich über die gesamte Schienenlänge.

In den Seitenwänden 8 der wannenartigen Vertiefung 7 sind einander gegenüberliegend zwei parallele Kugellaufbahnen 10 ausgebildet, die durch im Querschnitt im wesentlichen teilkreisförmige Profilrillen gebildet sind, welche in das gehärtete Material der Führungsschiene 1 im Bereiche der Seitenwände unmittelbar eingearbeitet sein können, wie dies in Fig. 3 dargestellt ist.

Alternativ können diese ersten Kugellaufbahnen 10 aber auch in Führungsleisten 11 aus gehärtetem Material ausgearbeitet sein, die dann ihrerseits wiederum in die aus einem anderen, bspw. weicheren Material bestehende Führungsschiene 1 im Bereiche der Seitenwände 8 der wannenartigen Vertiefungen 7 eingesetzt sind, wie dies anhand der Fig. 5 veranschaulicht ist.

In die wannenartige Vertiefung 7 der Führungsschiene 1 ragt ein an dem Schlitten 2 einstückig angeformtes Lagerteil 12, dessen im wesentlichen ebenfalls trapezförmige Querschnittsgestalt der Querschnittsgestalt der wannenartigen Vertiefung 7 angepaßt ist (vergl. bspw. Fig. 3). Im Bereiche der schräg aufeinander zulaufend ausgebildeten und durch eine Bodenfläche 14 miteinander verbundenen Seitenflächen 13 des Lagerteiles 12 sind zweite Kugellaufbahnen 15 vorgesehen, die parallel zueinander ausgerichtet sind und sich über die gesamte Schlittenlänge erstrecken. Die zweiten Kugellaufbahnen 15 sind wieder im wesentlichen teilkreisförmig nach Art von Profilrillen gestaltet. Sie können unmittelbar in das entsprechend gehärtete Material des Lagerteiles 12 eingearbeitet sein (Fig.3), oder die Anordnung kann, sowie in Fig. 4 dargestellt, getroffen sein, daß nämlich die zweiten Kugellaufbahnen 15 in gehärteten Profilleisten 16 ausgebildet sind, die ihrerseits in das gegebenenfalls aus einem anderen, insbesondere weicheren Material bestehende Lagerteil 12 eingesetzt sind.

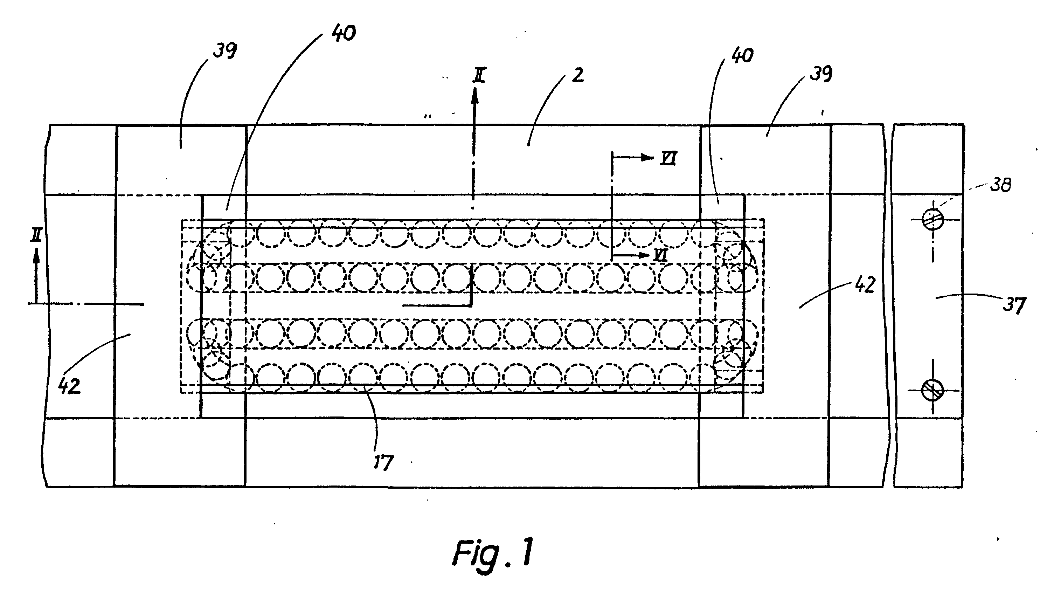

Im zusammengebauten Zustand (Fig. 1 - 3) ist der Schlitten 2 über das Lagerteil 12 und auf den jeweils paarweise einander zugeordneten Kugellaufbahnen 10, 15 befindliche Reihen von Kugeln 17 gegen die Führungsschiene 1 längsverschieblich abgestützt.

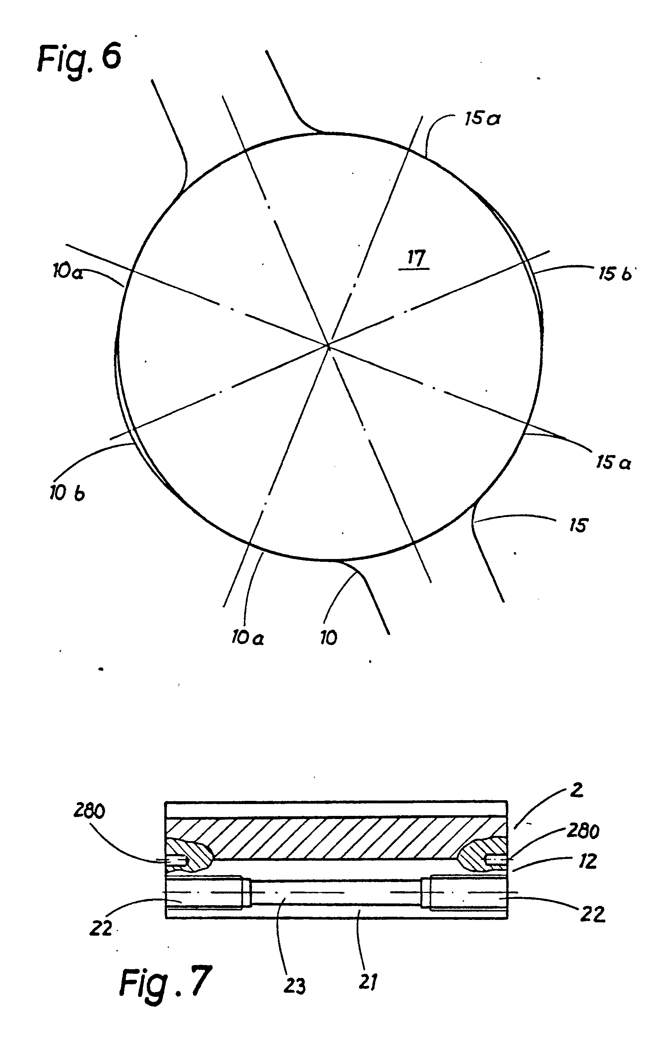

Die im Querschnitt im wesentlichen teilkreisförmigen Kugellaufbahnen 10, 15 umfassen dabei in der aus den Fig. 3,6 ersichtlichen Weise auf der zu der Öffnung und zu der Bodenwand 9 der wannenartigen Vertiefung 7 hinweisenden Seite teilweise die Kugeln 17, derart, daß der Schlitten 2 über das Lagerteil 12 an der Führungsschiene 1 unverlierbar gehalten ist. Das bedeutet, daß die Führungsschiene 1 mit ihrer Bodenstellfläche 5 wahlweise auf einen Träger oder Sockel aufgesetzt und der Schlitten 2 auf Druck beansprucht werden kann, oder aber, daß bei aufgehängter Führungsschiene 1 eine Beanspruchung des Schlittens 2 auf Zug (rechtwinklig) zu der dann nach oben weisenden Bodenstellfläche 5 vorgesehen werden kann. Die Führungsschiene 1 ist als formstabiler Träger ausgebildet; ihre Querschnittsabmessungen können in dem Bereich außerhalb der wannenartigen Vertiefung 7 ausschließlich mit Rücksicht auf die Erfordernisse des jeweiligen Einsatzzweckes und die aufzunehmende Belastung gewählt werden. Der Schlitten 2 kann dabei in seinen außerhalb der wannenartigen Vertiefung 7 der Führungsschiene 1 liegenden Bereichen mit einer ebenfalls im wesentlichen rechteckigen, d.h. der Querschnittsform der Führungsschiene 1 entsprechenden Querschnittsform, ausgebildet sein, so daß sich seitlich keine über die Führungsschiene 1 vorstehenden Teile ergeben, wie dies aus Fig. 3 augenfällig hervorgeht. Grundsätzlich sind naturgemäß auch Ausführungsformen denkbar, bei denen die Führungsschiene 1 quadratisch oder prismatisch ausgebildet ist, was dann in entsprechender Weise auch für den Schlitten 2 gelten wird, der erforderlichenfalls auch schmäler oder breiter als die Führungsschiene 1 sein kann.

Zur Befestigung der Führungsschiene 1 auf einem Träger oder dergl. weist diese durchgehende Schraubenlöcher 18 (Fig. 5) oder andere geeignete Befestigungseinrichtungen auf. Ebenso ist der Schlitten 2 (Fig. 4) mit Gewindebohrungen 19 und durchgehenden Bohrungen 20 versehen, die zur Verbindung des Schlittens 2 mit einem nicht weiter dargestellten Maschinenelement dienen.

Um günstige Laufverhältnisse der Kugeln 17 auf den Kugellaufbahnen 10, 15 zu erzielen, weist jede der Kugellaufbahnen 10, 15 im Querschnitt wenigstens zwei mit dem Kugelradius kreisförmig gekrümmte Bereiche 10a bzw. 15a auf, zwischen denen ein Bereich 10b bzw. 15b größeren Durchmessers liegt, der außer Berührung mit der Kugeloberfläche steht (Fig. 6).

In dem Lagerteil 12 des Schlittens 2 ist von dessen Bodenwand 14 ausgehend eine über die Länge durchgehende,randoffene, schlitzartige Nut 21 vorgesehen, die in den Bereich zwischen den beiden einander gegenüberliegenden Kugellaufbahnen 15 ragt. Von den beiden Stirnseiten des Schlittens 2 her führt in die schlitzartige Nut 21 jeweils eine mit ihrer Achse in der Symmetrieebene der Nut 21 liegende Gewindebohrung 22 (Fig. 7), an die sich eine leicht kegelige Bohrung 23 anschließt. In die Gewindebohrungen 22 ist jeweils ein Spreizelement 24 (Fig. 3) eingeschraubt, das mit einem entsprechend kegeligen Teil in die Kegelbohrung 23 ragt und, abhängig von seiner Einschraubtiefe, das Lagerteil 12 beidseitig der Nut 21 aufweitet. Dadurch wird eine Stelleinrichtung gebildet, die es gestattet, die Lage der zweiten Kugellaufbahnen 15 bezüglich der zugeordneten ersten Kugellaufbahnen 10 in dem geringfügigen Maße zu verstellen, wie es zur exakten Einjustierung des jeweils erforderlichen (sehr geringen) Lagerspieles erforderlich ist, so daß keine allzugroßen Genauigkeitsanforderungen an die Bearbeitung des Lagerteiles 12 bzw. der wannenartigen Vertiefung 7 der Führungsschiene 1 und der Kugellaufbahnen 10, 15 gestellt werden müssen.

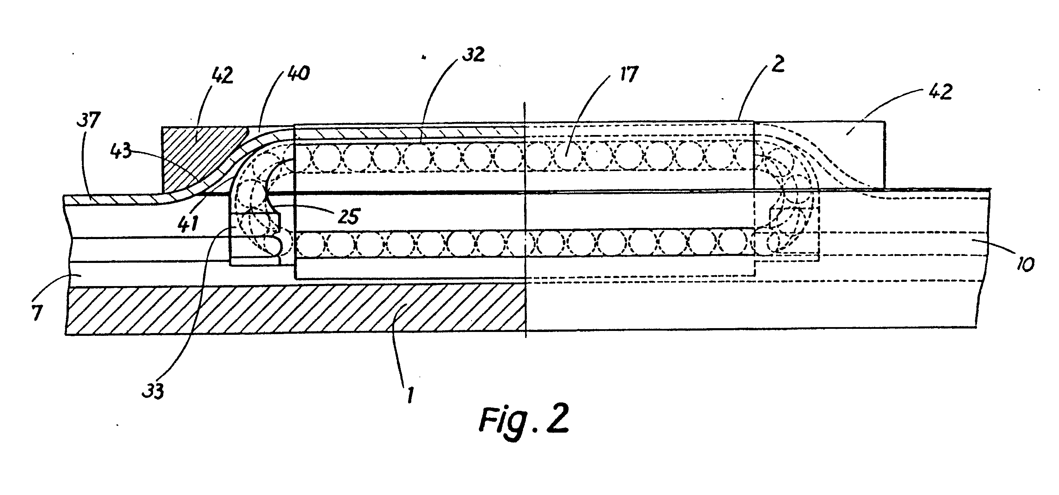

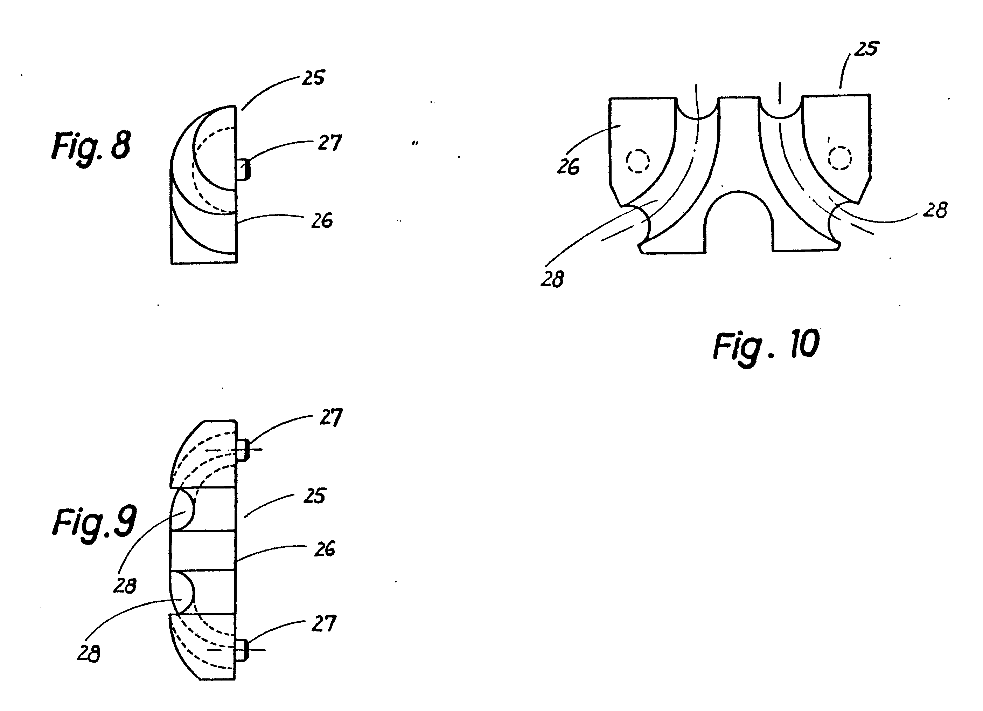

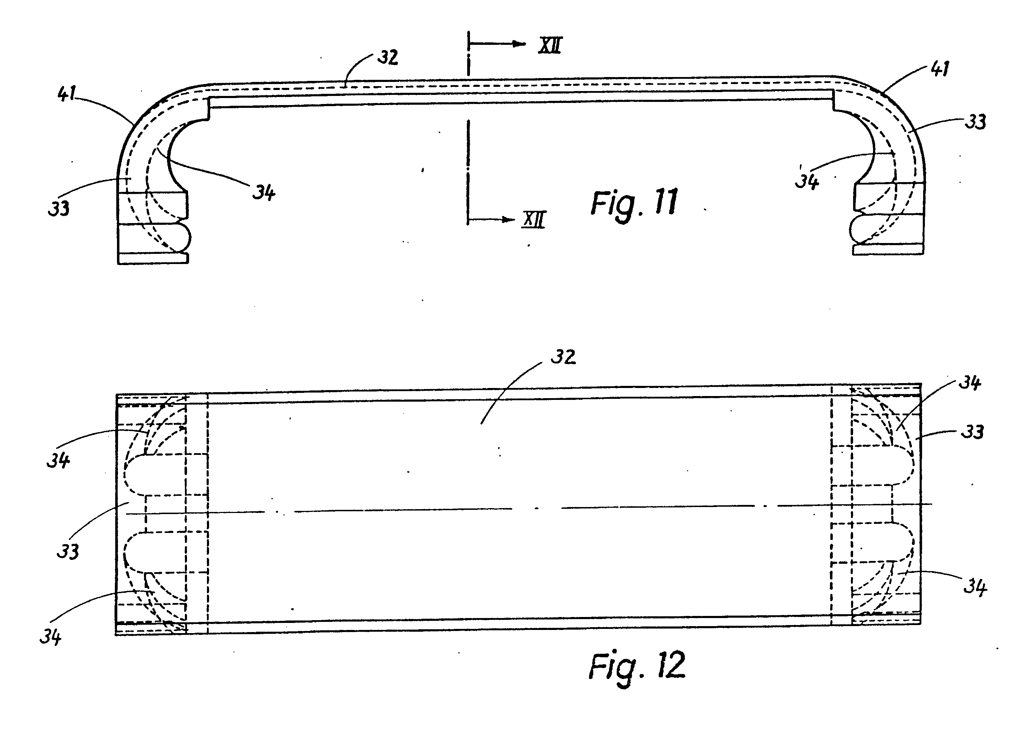

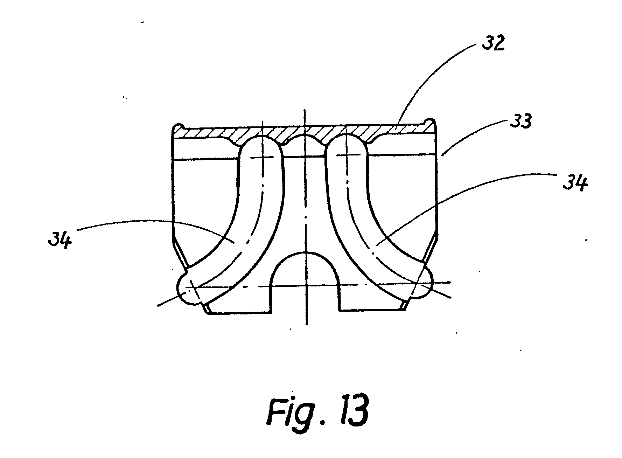

An die auf jeder Seite des Lagerteiles 12 einander paarweise zugeordneten Kugellaufbahnen 10, 15 schließen sich Umleit- und Rückführbahnen für die Kugeln 17 an. Zu diesem Zwecke sind auf das Lagerteil des Schlittens 2 stirnseitig zwei schalenförmige Kugelumleitelemente 25 aufgesetzt, wie sie im einzelnen in den Fig. 8 - 10 dargestellt sind. Jedes der aus Kunststoffmaterial bestehenden Kugelumleitelemente 25 ist mittels von einer ebenen Auflagefläche 26 vorstehender Befestigungszapfen 27, die in entsprechende Bohrungen 280 in dem Lagerteil 12 ragen, an dem Schlitten 2 fixiert. Auf der der Auflagefläche 26 gegenüberliegenden Außenseite sind in jedem Umleitelement 25 bogenförmig gekrümmte Kugelumleitkanäle 28 ausgebildet, die auf der einen Seite an die Kugellaufkanäle 10, 15 anschließen, und auf der anderen Seite zu in dem Schlitten 2 ausgebildeten parallelen Kugelrückführkanälen 29 führen. Die Kugelrückführkanäle 29 sind als randoffene, im Querschnitt etwa teilkreisförmig ausgebildete Nuten im Boden einer in dem Schlitten 2 vorgesehenen, sich nach oben zu öffnenden Vertiefung 31 gestaltet. Im montierten Zustand sind sie durch eine kappenartige Abdeckung 32 (Fig. 11, 12, 13) nach oben zu abgeschlossen, die aus Kunststoffmaterial bestehend in die Vertiefung 31 eingedrückt und in dieser formschlüssig verklemmt ist. An die Abdeckung 32 schließen sich stirnseitig zwei angeformte, ebenfalls schalenförmige Kugelumleitelemente 33 an; die auf ihrer Innenseite zu den Kugelumleitkanälen 28 (Fig. 10) komplementäre Kugelumleitkanäle 34 aufweisen, derart, daß sich im Zusammenwirken mit den Kugelumleitkanälen 28 vollständige Kugelumleitbahnen für die Kugeln 17 ergeben, die auf diese Weise aus den Kugellaufbahnen 10, 15 in die Kugelrückführbahnen 29 und von diesen wieder zurück in die Kugellaufbahnen 10, 15 umgeleitet werden, wie dies auch aus Fig. 2 zu entnehmen ist.

Der Schlitten 2 übergreift beidseitig des Lagerteiles 12 mit ebenen Flächenbereichen 35 die zu beiden Seiten der wannenartigen Vertiefung 7 sich erstreckenden oberen Flächenbereiche 6 der Führungsschiene 1, die parallel ausgerichtet sind. Zwischen den einander gegenüberliegenden Flächen 35, 6 wird damit jeweils ein enger paralleler Spalt 36 (Fig. 3) ausgebildet, der eine wirkungsvolle Abdichtung der Kugellaufbahnen 10, 15 im Bereiche des Schlittens 2 bewirkt.

Um die wannenartige Vertiefung 7 in den Bereichen beidseitig des Schlittens 2 zu verschließen, ist ein aus Kunststoffmaterial bestehendes biegsames Abdeckband 37 vorgesehen, das sich über die Länge der Führungsschiene 1 erstreckt und im Bereiche deren Enden, bspw. mittels Schrauben 38 (Fig. 1), fixiert ist. Das biegsame Abdeckband 37 ist über den Schlitten 2 hinweggeführt, wobei es in der aus Fig. 3 ersichtlichen Weise in dessen Vertiefung 31 liegt, deren Tiefe derart bemessen ist, daß das Abdeckband 37 mit seiner Oberseite etwa mit der Oberseite des Schlittens 2 fluchtet. im der Vertiefung 31 ist das Abdeckband 37 auf der Abdeckung 32 der Nuten 30 geführt.

An beiden Stirnseiten des Schlittens 2 sind zwei im wesentlichen bügelförmige Bandumlenkelemente 39 angeschraubt, die mit der Schlittenstirnseite jeweils eine Öffnung 40 begrenzen, durch die sich das schalenförmige Kugelumleitelement 33 (Fig. 11) mit einer gekrümmten Außen- oder Bandleitfläche 41 erstreckt. Der Querschenkel 42 jedes Bandumlenkelementes 39 ist auf seiner der Bandleitfläche 41 zugewandten Seite in der aus Fig. 2 zu entnehmenden Weise mit einer gekrümmten Fläche 43 ausgebildet, an der das biegsame Band 37 anliegt. Bei einer Längsbewegung des Schlittens 2 auf der Führungsschiene 1 wird deshalb das biegsame Band 37 auf der in Bewegungsrichtung vorneliegenden Schlittenseite durch die Bandleitfläche 41 aus der wannenartigen Vertiefung 7 ausgehoben, während es auf der in Bewegungsrichtung hintenliegenden Seite des Schlittens 2 durch die gekrümmte Fläche 43 wieder in die wannenartige Vertiefung laufend eingedrückt wird.

Das biegsame Band 37 besteht aus Kunststoffmaterial und liegt mit seiner seitlichen Berandung in längsverlaufenden, im Querschnitt im wesentlichen L-förmigen Vertiefungen 44 (Fig. 3,5) am Rande der wannenartigen Vertiefung 7 der Führungsschiene 1 auf, derart, daß es im wesentlichen mit der oberen Fläche 6 der Führungsschiene 1 fluchtet. In der Nähe der Seitenränder sind an dem Band 37 zwei längsverlaufende Profilstege 45 angeformt, die in entsprechende rillenartige Vertiefungen 46 der Führungsschiene 1 eingreifen und damit das biegsame Band 37 an den Seitenwandungen 8 der wannenartigen Vertiefung 7 formschlüssig verriegeln.

## Patentansprüche

1. Linearlageranordnung mit einer eine längsverlaufende, wannenartige Vertiefung (7) aufweisenden Führungsschiene (1), die im Bereiche ihrer nach innen zu geneigt angeordneten Seitenflächen (8) zwei erste Kugellaufbahnen (10) trägt, mit einem Schlitten (2), der ein der Form der wannenartigen Vertiefung (7) angepaßtes und in diese ragendes und starr mit dem Schlitten (2) verbundenes oder an diesem einstückig ausgebildetes Lagerteil (12) aufweist, an dem zwei den ersten Kugellaufbahnen (10) zugeordnete zweite Kugellaufbahnen (15) angeordnet sind und das über auf den Kugellaufbahnen (10, 15) befindliche Kugelreihen (17) gegen die Führungsschiene (1) abgestützt ist, sowie mit stirnseitig an dem Schlitten (2) angeordneten Kugelumleitungseinrichtungen (25), die mit an dem Schlitten (2) vorgesehenen Kugelrückführungsbahnen (29) in Verbindung stehen, wobei die Kugellaufbahnen (10, 15) an der Führungsschiene (1) und an dem Lagerteil (12) des Schlittens (2) jeweils als im Querschnitt im wesentlichen teilkreisförmige, die Kugelreihen (17) auf der zu der Öffnung der wannenartigen Vertiefung (7) hinweisenden Seite (8, 13) teilweise umfassende Profilrillen (10, 15) ausgebildet sind, derart, daß der Schlitten (2) über das Lagerteil (12) an der Führungsschiene (1) unverlierbar gehaltert ist, dadurch gekennzeichnet, daß die Kugelrückführungsbahnen (29) durch Nuten in dem Schlitten (2) gebildet sind, welche durch Abdeckmittel (32) abgedeckt sind, und daß über die Abdeckmittel (32) ein biegsames Abdeckband (37) geführt ist, durch das die wannenartige Vertiefung (7) der auf der der wannenartigen Vertiefung (7) gegenüberliegenden Seite wenigstens eine Befestigungsfläche (5) aufweisenden, als formstabiler Träger ausgebildeten Führungsschiene (1) beidseitig des Schlittens (2) verschlossen ist und das endseitig an der Führungsschiene (1) verankert und über den Schlitten (2) geführt ist.

2. Linearlageranordnung nach Anspruch 1, dadurch gekennzeichnet, daß die ersten und/oder die zweiten Kugellaufbahnen (10; 15) in gehärteten Führungsleisten (11, 16) ausgebildet sind, die in die Führungsschiene (1) bzw. das Lagerteil (12) eingesetzt sind.

3. Linearlageranordnung nach Anspruch 1 oder 2, dadurch gekennzeichnet, daß die Führungsschiene (1) eine im wesentlichen rechteckige oder quadratische Querschnittsgestalt aufweist und der Schlitten (2) in dem Bereiche oberhalb des Lagerteiles (12) mit einer der Führungsschiene (1) entsprechenden, im wesentlichen rechteckigen bzw. quadratischen Querschnittsgestalt ausgebildet ist.

4. Linearlageranordnung nach einem der vorhergehenden Ansprüche, dadurch gekennzeichnet, daß der Schlitten (2) beidseitig des Lagerteils (12) im wesentlichen ebene Flächenbereiche (35) aufweist, durch die zusammen mit zugeordneten ebenen Flächenbereichen (6) beidseitig der wannenartigen Vertiefung (7) der Führungsschiene (1) jeweils ein enger Spalt (36) begrenzt ist.

5. Linearlageranordnung nach einem der vorhergehenden Ansprüche, dadurch gekennzeichnet, daß das biegsame Band (37) und/oder die Führungsschiene (1) Halterungsmittel (45, 46) aufweisen, mit denen das Band (37) in der wannenartigen Vertiefung (7) beidseitig des Schlittens (2) lösbar gehalten ist, und daß an dem Schlitten (2) das Band (37) auf der einen Schlittenseite in die wannenartige Vertiefung (7) eindrückende und auf der anderen Schlittenseite aus dieser aushebende Bandumlenkmittel (39-43) angeordnet sind.

6. Linearlageranordnung nach Anspruchs 5, dadurch gekennzeichnet, daß an der Führungsschiene (1) im Bereiche der wannenartigen Vertiefung (7) längsverlaufende Nuten (46) oder Stege angeordnet sind, mit denen Halteteile (45) an dem biegsamen Band (37) lösbar verriegelbar sind.

7. Linearlageranordnung nach einem der Ansprüche 5 oder 6, dadurch gekennzeichnet, daß das biegsame Band (37) mit den beidseitig des Schlittens (2) seitlich angrenzenden Oberflächenbereichen (6) der Führungsschiene (1) und/oder des Schlittens im wesentlichen fluchtend angeordnet ist.

8. Linearlageranordnung nach Anspruch 1, dadurch gekennzeichnet, daß die Abdeckmittel durch wenigstens eine auf den Schlitten (2) aufgesetzte Abdeckkappe (32) oder -platte gebildet sind.

9. Linearlageranordnung nach einem der vorhergehenden Ansprüche, dadurch gekennzeichnet, daß die Kugelumleiteinrichtungen (25, 33) Kugelumleitkanäle (28, 34) begrenzende schalenförmige Elemente aufweisen, die stirnseitig mit dem Schlitten (2) verbunden sind.

10. Linearlageranordnung nach Anspruch 9, dadurch gekennzeichnet, daß wenigstens ein Teil (33) der schalenförmigen Elemente an den Abdeckmitteln (32) gehaltert sind.

11. Linearlageranordnung nach einem der vorhergehenden Ansprüche, dadurch gekennzeichnet, daß jede Kugellaufbahn (10, 15) im Querschnitt wenigstens zwei mit dem Kugelradius kreisförmig gekrümmte Bereiche (10a, 15a) und einen dazwischenliegenden, außer Berührung mit der Kugeloberfläche stehenden dritten Bereich (10b, 15b) aufweist.

12. Linearlageranordnung nach einem der vorhergehenden Ansprüche, dadurch gekennzeichnet, daß das Lagerteil (12) des Schlittens eine die Lage der zweiten Kugellaufbahnen (15) zu den ersten Kugellaufbahnen (10) beeinflussende Stelleinrichtung (21, 22, 23, 24) aufweist.

13. Linearlageranordnung nach Anspruch 12, dadurch gekennzeichnet, daß die Stelleinrichtung (21, 22, 23, 24) eine in dem Bereich zwischen den beiden zweiten Kugellaufbahnen (15) wirksame Spreizeinrichtung aufweist.

14. Linearlageranordnung nach Anspruch 13, dadurch gekennzeichnet, daß die Spreizeinrichtung eine zwischen die beiden Kugellaufbahnen (15) ragende randoffene, schlitzartige Nut (21) aufweist, in die verstellbare Spreizelemente (24) ragen.

## Claims

1. A linear bearing arrangement, having a guide rail (1) which has a longitudinally extending, trough-like depression (7) and which bears two first ball tracks (10) in the zone of its inwardly inclined lateral surfaces (8); a carriage (2) having a bearing member (12) which is adapted to the shape of the trough-like depression (7) and which extends thereinto and is rigidly connected to the carriage (2) or constructed unitarily therewith and on which two second ball tracks (15) associated with the first ball tracks (10) are disposed and which bears against the guide rail (1) via rows of balls (17) disposed on the ball tracks (10, 15); and ball deflecting devices (25) disposed on the carriage (2) at the end and connected to ball return tracks (29) provided on the carriage (2), the ball tracks (10, 15) on the guide rail (1) and on the bearing member (12) of the carriage (2) each being so constructed in the form of sectional grooves (10, 15) which are substantially part-circular in cross-section and partially engage around the rows of balls (17) on the side (6, 13) pointing towards the opening of the trough-like depression (7) that the carriage (2) is non-releasably retained on the guide rail (1) via the bearing member (12), characterized in that the ball return tracks (29) are formed by grooves in the carriage (2) covered by covering means (32), and extending over the covering means (32) is a flexible cover band (37) by which the trough-like depression (7) of the guide rail (1), constructed as a dimensionally stable support and having at least one attaching surface (5) on the side opposite the trough-like depression (7), is closed on both sides of the carriage (2) and which is anchored to the guide rail (1) at the end and extends over the carriage (2).

2. A linear bearing arrangement according to claim 1, characterized in that the first and/or the second ball tracks (10, 15) are constructed in hardened guide strips (11, 16) inserted in the guide rail (1) and the bearing member (12).

3. A linear bearing arrangement according to claims 1 or 2, characterized in that the guide rail (1) is substantially rectangular or square in cross-sectional shape,, and in the zone above the bearing member (12) the carriage (2) is constructed with a substantially rectangular or square cross-sectional shape corresponding to the guide rail (1).

4. A linear bearing arrangement according to one of the preceding claims, characterized in that the carriage (2) has on both sides of the bearing member (12) substantially flat surface areas (35), which together with associated flat surface areas (6) on both sides of the trough-like depression (7) of the guide rail (1) each bound a narrow gap (36).

5. A linear bearing arrangement according to one of the preceding claims, characterized in that the flexible band (37) and/or the guide rail (1) have retaining means (45, 46) by which the band (37) is releasably retained in the trough-like depression (7) on both sides of the carriage (2), and disposed on the carriage (2) are band deflecting means (39-43) which press the band (37) into the trough-like depression (7) on one side of the carriage and which lift the band out of the depression on the other side of the carriage.

6. A linear bearing arrangement according to claim 5, characterized in that the guide rail (1) is formed in the zone of the trough-like depression (7) with longitudinally extending grooves (46) or webs by which retaining members (45) can be releasably locked to the flexible band (37).

7. A linear bearing arrangement according to one of claims 5 or 6, characterized in that the flexible band (37) is disposed substantially in alignment with those surface zones (6) of the guide rail (1) and/or the carriage which adjoin the carriage (2) laterally on both sides.

8. A linear bearing arrangement according to claim 1, characterized in that the covering means are formed by at least one cover cap (32) or cover plate fitted on to the carriage (2).

9. A linear bearing arrangement according to one of the preceding claims, characterized in that the bounding deflecting devices (25, 33) have shell-shaped elements which bound ball deflecting channels (28, 34) and which are connected to the carriage (2) at the end.

10. A linear bearing arrangement according to claim 9, characterized in that at least a proportion (33) of the shell-shaped elements are retained on the covering means (32).

11. A linear bearing arrangement according to one of the preceding claims, characterized in that each ball track (10, 15) has in cross-section at least two zones (10a, 15a) curved circularly with the ball radius and a third zone (10b, 15b) which is disposed therebetween and which is out of contact with the ball surface.

12. A linear bearing arrangement according to one of the preceding claims, characterized in that the bearing member (12) of the carriage has an adjusting device (21, 22, 23, 24) which influences the position of the second ball tracks (15) in relation to the first ball tracks (10).

13. A linear bearing arrangement according to claim 12, characterized in that the adjusting device (21, 22, 23, 24) has an expanding device operative in the zone between the two second ball tracks (15).

14. A linear bearing arrangement according to claim 13, characterized in that the expanding device has a slot-like groove (21) open at the edges which extends between the two ball tracks (15) and into which adjustable expanding elements (24) extend.

**Revendications**

1. Palier linéaire comprenant un rail de guidage (1) qui présente une rainure (7) longitudinale en forme de cuvette et porte, dans la zone de ses surfaces latérales (8) inclinées vers l'intérieur, deux premiers chemins de roulement (10) de billes, comprenant un chariot (2) qui présente un élément-palier (12), dont la forme est adaptée à celle de la rainure (7) en forme de cuvette, qui pénètre dans la rainure, est relié rigidement au chariot (2) ou réalisé d'une seule pièce avec ce dernier, sur lequel sont disposés deux deuxièmes chemins de roulement (15) de billes associés aux premiers chemins de roulement (10) de billes et qui prend appui sur le rail de guidage (1) par l'intermédiaire de rangées de billes (17) se trouvant sur les chemins de roulement (10, 15) de billes, et comprenant des dispositifs (25) de recirculation de billes qui sont disposés sur les faces frontales du chariot (2) et sont reliés à des voies (29) de recirculation de billes prévues sur le chariot (2), les chemins de roulement (10, 15) de billes sur le rail de guidage (1) et sur l'élément-palier (12) du chariot (2) étant réalisés chaque fois en tant que rainures profilées (10, 15) sensiblement en forme de cercle partiel qui entourent partiellement les rangées de billes (17) sur le côté (8, 13) orienté vers l'ouverture de la rainure (7) en forme de cuvette, de manière telle que le chariot (2) soit maintenu par l'élément-palier (2) de manière imperdable sur le rail de guidage (1), caractérisé par le fait que les voies (29) de recirculation de billes sont constituées par des rainures dans le chariot (2) qui sont recouvertes par des moyens de recouvrement (32), et que sur les moyens de recouvrement (32) passe une bande de recouvrement (37) flexible, par laquelle la rainure (7) en forme de cuvette du rail de guidage (1), présentant au moins une surface de fixation (5) sur sa face opposée à la rainure (7) en forme de cuvette et réalisé sous forme de poutre indéformable, est fermée sur les deux côtés du chariot (2) et qui est ancrée à ses extrémités sur le rail de guidage (1) et passe sur le chariot (2).

2. Palier linéaire selon la revendication 1, caractérisé par le fait que les premiers et/ou les deuxièmes chemins de roulement (10; 15) de billes sont réalisés dans des règles de guidage (11, 16) trempées qui sont insérées dans le rail de guidage (1) ou dans l'élément-palier (12).

3. Palier linéaire selon la revendication 1 ou 2, caractérisé par le fait que le rail de guidage (1) présente une section sensiblement rectangulaire ou carrée et le chariot (2) présente, dans la zone au-dessus de l'élément-palier (12), une section sensiblement rectangulaire ou carrée, correspondant au rail de guidage (1).

4. Palier linéaire selon l'une des revendications précédentes, caractérisé par le fait que le chariot (2) présente sur les deux côtés de l'élément-palier (12) des surfaces (35) sensiblement planes qui délimitent, conjointement avec des surfaces (6) planes associées, chaque fois un interstice (36) étroit sur les deux côtés de la rainure (7) en forme de cuvette du rail de guidage (1).

5. Palier linéaire selon l'une des revendications précédentes, caractérisé par le fait que la bande (37) flexible et/ou le rail de guidage (1) présentent des moyens d'accrochage (45, 46) par lesquels la bande (37) est maintenue de façon amovible dans la rainure (7) en forme de cuvette, sur les deux côtés du chariot (2), et qu'il est disposé sur le chariot (2) des moyens (39-43) de déviation de bande qui enfoncent la bande (37) dans la rainure (7) en forme de cuvette sur un côté du chariot et l'extraient sur l'autre côté du chariot.

6. Palier linéaire selon la revendication 5, caractérisé par le fait que des rainures (46) ou des nervures longitudinales sont prévues sur le rail de guidage (1) dans la zone de la rainure (7) en forme de cuvette, qui permettent de verrouiller de façon amovible les moyens d'accrochage (45) de la bande (37) flexible.

7. Palier linéaire selon l'une des revendications 5 ou 6, caractérisé par le fait que la bande (37) flexible est sensiblement alignée avec les surfaces (6), latéralement contiguës, de part et d'autre du chariot (2), du rail de guidage (1) et/ou du chariot.

8. Palier linéaire selon la revendication 1, caractérisé par le fait que les moyens de recouvrement sont formés par au moins une coiffe (32) ou plaque de recouvrement posée sur le chariot (2).

9. Palier linéaire selon l'une des revendications précédentes, caractérisé par le fait que les dispositifs (25, 33) de recirculation de billes présentent des éléments en forme de coque qui délimitent des conduits (28, 34) de recirculation de billes et sont reliés au chariot (2) sur ses faces frontales.

10. Palier linéaire selon la revendication 9, caractérisé par le fait qu'au moins une partie (33) des éléments en forme de coque est fixée sur les moyens de recouvrement (32).

11. Palier linéaire selon l'une des revendications précédentes, caractérisé par le fait que chaque chemin de roulement (10, 15) de billes présente en section au moins deux zones (10a, 15a) incurvées de façon circulaire de même rayon que les billes et une troisième zone (10b, 15b) se trouvant entre les deux premières qui n'est pas en contact avec la surface des billes.

12. Palier linéaire selon l'une des revendications précédentes, caractérisé par le fait que l'élément-palier (12) du chariot présente un dispositif de réglage (21, 22, 23, 24) influençant la position des deuxièmes chemins de roulement (15) de billes par rapport aux premiers chemins de roulement (10) de billes.

13. Palier linéaire selon la revendication 12, caractérisé par le fait que le dispositif de réglage (21, 22, 23, 24) présente un dispositif d'écartement agissant dans la zone entre les deux deuxièmes chemins de roulement (15) de billes.

14. Palier linéaire selon la revendication 13, caractérisé par le fait que le dispositif d'écartement présente une rainure (21) en forme de fente à fond ouvert, qui pénètre entre les deux chemins de roulement (15) de billes et dans laquelle s'engagent des éléments d'écartement (24) réglables.

*Fig.1*

EP 0 268 011 B1

Fig. 2

Fig. 3

EP 0 268 011 B1

Fig. 4

Fig. 5

Fig. 6

Fig. 7

Fig. 10

Fig. 8

Fig. 9

Fig. 11

Fig. 12

Fig. 13